# EUROPÄISCHE PATENTSCHRIFT

(11) **EP 0 835 286 B1**
(45) Veröffentlichungstag und Bekanntmachung des Hinweises auf die Patenterteilung: **06.10.1999**
(21) Anmeldenummer: 96922865.9
(22) Anmeldetag: 20.06.1996
(51) Int. Cl.: C08L 25/00

(54) **SCHLAGZÄHE FORMMASSE AUS STYROLPOLYMEREN**
IMPACT-RESISTANT MOLDING COMPOUND MADE OF STYRENE POLYMERS
MATIERE MOULABLE RESISTANT AU CHOC A BASE DE POLYMERES DE STYRENE

(30) Priorität: 29.06.1995 DE 19523585
(43) Veröffentlichungstag der Anmeldung: 15.04.1998
(73) Patentinhaber: BASF AKTIENGESELLSCHAFT, 67056 Ludwigshafen (DE)
(72) Erfinder: LOTH, Wolfgang, D-67098 Bad Dürkheim (DE); KNOLL, Konrad, D-67069 Ludwigshafen (DE); GAUSEPOHL, Hermann, D-67112 Mutterstadt (DE)
(86) Internationale Anmeldenummer: EP9602679
(87) Internationale Veröffentlichungsnummer: WO9701601

(56) Entgegenhaltungen:
- EP-A- 0 260 454
- EP-A- 0 356 249
- EP-A- 0 404 954
- EP-A- 0 595 120
- EP-A- 0 629 658
- DE-A- 2 632 235
- DE-A- 4 209 031
- FR-A- 2 259 874
- US-A- 4 097 555
- US-A- 4 839 418
- US-A- 4 940 754
- US-A- 5 089 558
- US-A- 5 290 875

## Beschreibung

Die Erfindung betrifft eine schlagzähe thermoplastische Formmasse sowie ein Verfahren zu deren Herstellung.

Thermoplastische Formmassen auf der Grundlage von Polymeren von Styrol und dessen technischen Äquivalenten, Styrol-Acrylnitril oder Methylmethacrylat sind transparent und steif, aber für manche Anwendungen ungeeignet, da sie sehr spröde sind.

Der allgemein übliche Weg, um schlagzähe Formmassen zu erhalten, ist die Zähmodifizierung, wobei meistens die Polymerisation der Monomeren in Gegenwart eines geeigneten Kautschuks vorgenommen wird, und wobei der Kautschuk durch Pfropfung mit dem entstehenden Polymeren bzw. Copolymeren (der Matrix) verträglich (kompatibel) wird.

Technisch wird entweder die Polymerisation der Matrix in Gegenwart des Kautschuks im sog. Masse- oder Lösungs-Verfahren vorgenommen oder der benötigte gepfropfte Kautschuk wird (i.A. in Emulsion) hergestellt und dem Matrixpolymeren zugesetzt. Beim Masse- oder Lösungs-Verfahren werden mehrstufige kontinuierliche Verfahren bevorzugt (z.B. DE 1 770 392; DE 4 046 718; US 2 727 884; US 3 903 202).

Zur Zähmodifizierung von Styrol- und Styrol-Acrylnitril-Polymeren werden Polybutadien-Kautschuke, Butadien-Styrol-Blockkautschuke und für Styrol-Acrylnitril- und Methylmethacrylat-Polymere auch Acrylat-Kautschuke eingesetzt (vgl. z.B. DE 2 427 960 bzw. DE 1 260 135, EP 244 856 und EP 356 249).

Polybutadienhaltige Formmassen sind zwar zäh, aber nicht mehr transparent. Sie sind darüber hinaus wegen des hohen Doppelbindungsgehaltes wenig witterungsbeständig.

Der bei Styrol-Acrylnitril- und Methylmethacrylat-Formmassen bevorzugt benutzte Weg ist die radikalische Emulsionspolymerisation der Kautschukphase mit anschließender Erzeugung einer Pfropfhülle, die als Verträglichkeitsvermittler zur späteren Anbindung an die Matrix-Phase dient und Koagulation der Emulsion zu Partikeln von ca. 100 bis 1000 nm mittlerem Durchmesser. Die Partikel werden nach der Trocknung in einem weiteren Schritt in die fertige Matrix eingearbeitet.

Das Masse/Lösungs-Verfahren zur Herstellung von schlagzäh modifizierten Styrolpolymeren führt zu nicht-transparenten (opaken) Formmassen, die nicht besonders witterungsbeständig sind. Das Emulsions-Verfahren mit anschließender Einarbeitung des Pfropfkautschuks ist sehr aufwendig und man erzielt nur mit Acrylat-Kautschuken oder doppelbindungsarmen Olefinkautschuken (EPM, EPDM) ausreichende Witterungsbeständigkeit.

Ziel der Erfindung ist es, schlagzäh-modifizierte Formmassen auf der Grundlage von Styrol, Styrol-Acrylnitril oder Methylmethacrylat mit einem speziellen Kautschuk auf einfachem, wirtschaftlichen Weg, der die vorgenannten Nachteile nicht oder in erheblich geringerem Maße als bisher aufweist in existierenden Polymerisationsanlagen kontinuierlich herzustellen.

Ein weiteres Ziel der Erfindung sind thermoplastische Formmassen auf der Basis von vinylaromatischen (d.h. Styrol-)Monomeren, Copolymeren von Styrol und Acrylnitril und (Meth)acrylestern, die gegenüber entsprechenden unmodifizierten Formmassen nicht nur wesentlich verbesserte mechanische Eigenschaften aufweisen, sondern darüber hinaus auch transparent sind.

Ein weiteres Ziel der Erfindung ist es, ein Verfahren aufzuzeigen, mit dem die Formmassen mit den oben genannten Eigenschaften hergestellt werden können.

Diese und andere Ziele werden erfindungsgemäß durch Massepolymerisation (eventuell unter Zusatz von geringen Mengen eines. Lösungsmittels) von vinylaromatischen Monomeren (A1) oder Massecopolymerisation von vinylaromatischen Monomeren (A1) mit polaren Comonomeren (A2) in Gegenwart von speziellen butadienhaltigen Kautschuken (b) erreicht,- die statistisch oder quasistatistisch aufgebaute Blöcke aus Styrol und Butadien enthalten und die während der Polymerisation Einschlüsse (Okklusionen) von Matrix-Material (A) aufnehmen und in dieser Form die Weichphase (B) bilden.

Unmittelbarer Erfindungsgegenstand sind Formmassen auf der Grundlage von, bezogen auf die Formmasse aus A und B,
A: 60 bis 98 Gew.-% einer Hartmatrix A aus polymerisierten oder copolymerisierten Einheiten mindestens eines vinylaromatischen Monomeren (A1) oder mindestens eines vinylaromatischen Monomeren (A1) und mindestens eines polaren Comonomeren (A2) und
B: 2 bis 40 Gew.-% einer Weichphase B, gebildet aus einem Blockcopolymer aus 55 bis 90 Gew.-% vinylaromatischen Monomeren V und 10 bis 45 Gew.-% Dien D, das mindestens einen statistisch oder quasi-statistisch aufgebauten Block (V/D) aus vinylaromatischem Monomeren und Dien und mindestens einen aus einem vinylaromatischen Monomeren aufgebauten Block V aufweist und, bezogen auf die Weichphase B, 10 bis 80 Gew.-% während der Polymerisation der Hartmatrix A in Gegenwart des Blockkautschuks gebildete Einschlüsse (Okklusionen a) von Matrix-Material A enthält.

Für die vorstehend angegebene Zusammensetzung aus A und B sollen die in der Weichphase B enthaltenen Einschlüsse von Matrix-Material (a) nicht mitgerechnet werden.

Die Einsatzstoffe, die beanspruchten Formmassen und ihre Herstellung werden in den folgenden Abschnitten näher dargestellt und an Beispielen veranschaulicht.

### Hartmatrix A

Als Einsatzstoffe für die Matrix der Polymeren auf der Basis von vinylaromatischen Monomeren eignen sich allgemein Styrolmonomere.

Erfindungsgemäß können Styrol und die üblichen, als technische Äquivalente anzusehenden substituierten Styrole in beliebigen Kombinationen und Mischungsverhältnissen eingesetzt werden. Bevorzugt werden Styrol, alpha-Methylstyrol und 4-Methylstyrol oder deren Mischungen. Besonders bevorzugt wird Styrol.

Als polaren Comonomere A2 eignen sich polare Vinylmonomere der bekannten Struktur H2C=CR1R2, wobei R1 Wasserstoff, Phenyl oder niederes Alkyl, insbesondere Methyl oder Ethyl und R2 Carboxyl, Carb-nieder-alkoxy wie Carbomethoxy, Carbaryloxy wie Carbophenoxy, Carboxamid, Carboxy-N-niederalkyl-amid, Carboxy-N-phenylamid oder Nitril bedeutet.

Ferner geeignet als polare Comonomere A2 sind Malein- oder Fumarsäureanhydrid und deren Ester, Halbester oder - eventuell N-niederalkyl- oder arylsubstituierten - Imide.

Als polare Comonomere A2 sind z.B. geeignet Acrylnitril, Maleinsäureanhydid, Maleinsäureimid, Maleinsäure-N-Phenylimid, Maleinoder Fumarsäurehalbester und -diester, Methylacrylat, Methylmethacrylat, Cyclohexylmethacrylat, Phenylmethacrylat, Methylacrylat, Butylacrylat, Methacrylamid, Acrylamid und Acrylsäure.

### Weichphase B

Die Weichphase (Kautschukphase) B wird erfindungsgemäß bei der polymerisation der Hartmatrix A in Gegenwart eines speziellen Blockkautschuks gebildet, wobei Einschlüsse (Okklusionen; "a") von Matrix-Material A entstehen und gegebenenfalls ferner in gewissem Umfang Pfropfung eintritt. Der Blockkautschuk wird durch anionische Polymerisation entsprechend, der nicht vorveröffentlichten deutschen Offenlegungsschrift 44 20 952 aus vinylaromatischen Monomeren (V) und Dien-Monomeren (D) erhalten. Dabei handelt es sich um einen Kautschuk, der sowohl Blöcke aus Vinylaromaten und Dienen mit scharfem oder verschmiertem Übergang enthält und je Molekül mindestens einen Block (nachstehend als V/D bezeichnet) enthält, in dem V und D statistisch oder quasi-statistisch verteilt, d.h. in sehr kurzen Sequenzen auftreten, als auch Blöcke V, die im wesentlichen nur aus vinylaromatischen Monomeren aufgebaut sind. Die Blockcopolymeren enthalten insgesamt 10 bis 85, vorzugsweise 20 bis 65 Gew.-% Dien und 90 bis 15 bzw. 80 bis 35 Gew.-% der Vinylaromaten. Für die erfindungsgemäßen Polymermassen werden sie in einer solchen Menge eingesetzt, daß der Dien-Anteil im Bereich von 2 bis 50, bevorzugt im Bereich von 5 bis 40 Gew.-% liegt.

Als vinylaromatische Monomere V sollen dabei Styrol und seine anionisch polymerisierbaren Derivate (alpha-Methylstyrol, 2-, 3-oder 4-Methylstyrol, 1,1-Diphenylethylen.etc.) gelten.

Dien-Monomere D im Sinne dieser Erfindung sind anionisch polymerisierbare Diene wie Butadien, Isopren, Piperylen, 1-Phenylbutadien. Die aufgeführten Monomeren können einzeln oder auch in Mischungen eingesetzt werden.

Geeignet für die vorliegende Erfindung sind zum Beispiel Blockcopolymerisate die eine der nachstehenden Strukturen aufweisen:

(1) [V-(D/V)]ₙ;

(2) [V-(D/V)]ₙ-V;

(3) (D/V)-[V-(D/V)]ₙ;

(4) X-[[V-(D/V)]ₙ]ₘ₊₁

(5) X-[[(D/V)-V]ₙ]ₘ₊₁;

(6) X-[[V-(D/V)]ₙ-V]ₘ₊₁;

(7) X-[[(D/V)-V]ₙ(D/V)lₘ₊₁;

(8) Y-[[V-(D/V)]ₙ]ₘ₊₁;

(9) Y-[[(D/V)-V]ₙ]ₘ₊₁;

(10) Y-[[V-(D/V)]ₙ-V]ₘ₊₁;

(11) Y-[[(D/V)-V]ₙ-(D/V)]ₘ₊₁;

wobei V für einen aus vinylaromatischen Einheiten aufgebauten und (D/V) für einen statistisch oder quasistatistisch aus Dien-und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

Die statistischen oder quasi-statistischen Blöcke ihrerseits können aus mehreren Segmenten unterschiedlicher Zusammensetzung oder unterschiedlichen Aufbaus aufgebaut sein:

(D/V)₁-(D/V)₂

(D/V)₁-(D/V)₂-(D/V)₁

(D/V)₁-(D/V)₂-(D/V)₃

Das Vinylaromat/Dien-Verhältnis in den einzelnen Blöcken D/V kann unterschiedlich oder gleich sein oder sich innerhalb eines Blocks kontinuierlich ändern: (D/V)1 --> (D/V)2, z.B. steigen oder abnehmen, mit der Maßgabe, daß die Glasübergangstemperatur Tg jedes Teilblocks (bestimmt nach K.H. Illers und H. Breuer, Kolloidzeitschrift 190/1, 16-34 (1963)) jeweils unter 25°C liegt.

Bevorzugte Polymerstrukturen sind V-(D/V); V-(D/V)-V; X-[-(D/V)-V]2 und Y-[-(D/V)-V]2, wobei der statistische oder quasi-statistische Block (D/V) selbst wieder in Blöcke (D1/V1)-(D2/V2) -(D3/V3)-... unterteilt sein kann. Bevorzugt besteht der statistische oder quasi-statistische Block aus 2 bis 15 statistischen Teilblöcken, besonders bevorzugt aus 3 bis 10 Teilblöcken. Die Aufteilung des statistischen Blocks (D/V) in möglichst viele Teilblöcke Dn/Vn hat den Vorteil, daß auch bei einer Zusammensetzung, die sich innerhalb eines Teilblocks Dn/Vn, ändert (was sich in der anionischen Polymerisation unter praktischen Bedingungen nur schwer vermeiden läßt), der (D/V)-Block insgesamt wie ein nahezu perfektes, statistisches Polymer verhält.

Die Blockcopolymerisate enthalten insgesamt 10 bis 85, vorzugsweise 20 bis 65 Gew.-% des Diens und 90 bis 15, vorzugsweise 80 bis 35 Gew.-% des Vinylaromaten.

Das Gewichtsverhältnis Vinylaromat V zu Dien D im statistisch aufgebauten (D/V)-Block kann unterschiedlich sein, z.B. variieren von 90:10 bis 10:90, solange die Randbedingung erfüllt ist, daß Tg unter 25°C liegt.

Das Molekulargewicht des Blocks (D/V) liegt üblicherweise zwischen 2 00 und 350 000 g/mol. Bevorzugt werden Werte zwischen 5 000 und 180 000 g/mol.

Das Molekulargewicht der erfindungsgemäß einsetzbaren Kautschuke liegt zwischen 40 000 g/mol und 500 000 g/mol. Bevorzugte Werte liegen zwischen 50 000 g/mol und 300 000 g/mol, wobei das Gewichtsmittel aus der analytischen Gelpermeationschromatographie gemeint ist.

Die Herstellung des für die erfindungsgemäß zu verwendenden kautschukelastischen Blockcopolymerisats ist wie erwähnt, in der nicht vorveröffentlichten deutschen Offenlegungsschrift 44 20 952 beschrieben, die nachstehend auszugsweise wiedergegeben wird.

Man erhält ein solches erfindungsgemäßes kautschukelastisches Blockcopolymerisat dadurch, daß im Rahmen der vorstehenden Parameter dessen kautschukelastische Blöcke aus einen statistischen Copolymerisat eines Vinylaromaten mit einem Dien gebildet werden; statistische Copolymerisate von Vinylaromaten und Dienen erhält man durch Polymerisation in Gegenwart eines polaren Cosolvens.

Demnach werden die Weichblöcke des Blockcopolymerisats durch anionische Polymerisation in einem unpolaren Lösungsmittel unter Zusatz eines polaren Cosolvens hergestellt. Es besteht dabei die Vorstellung, daß das Cosolvens gegenüber dem Metallkation als Lewis-Base wirkt. Als Lösungsmittel werden bevorzugt aliphatische Kohlenwasserstoffe wie Cyclohexan oder Methylcyclohexan verwendet. Als Lewis-Basen werden polare aprotische Verbindungen wie Ether und tertiäre Amine bevorzugt. Beispiele für besonders effektive Ether sind Tetrahydrofuran und aliphatische Polyether wie Diethylenglycoldimethylether. Als tert. Amine sind Tributylamin und Pyridin zu nennen. Das polare Cosolvens wird dem dem unpolaren Lösungsmittel in einer geringen Menge, z.B. von 0.5 bis 5 Vol.-% zugesetzt. Besonders bevorzugt ist Tetrahydrofuran in einer Menge von 0.1 bis 0.3 Vol-%. Erfahrungsgemäß kommt man mit einer Menge von etwa 0.2 Vol.-% in den meisten Fällen aus.

Durch die Dosierung und Struktur der Lewis-Base werden die Copolymerisationsparameter und der Anteil an 1,2- bzw 1,4-Verknüpfungen der Dieneinheiten bestimmt. Die erfindungsgemäßen Polymeren haben z.B. einen Anteil von 15 bis 40 % an 1,2-Verknüpfungen und 85 bis 60 % an 1,4-Verknüpfungen bezogen auf alle Dieneinheiten.

Die Polymerisationstemperatur kann zwischen 0 und 130°C betragen. Bevorzugt wird der Temperaturbereich zwischen 30 und 100°C.

Für die mechanischen Eigenschaften ist der Volumenanteil der Weichblöcke innerhalb des Blockkautschuks von Bedeutung. Erfindungsgemäß liegt der Volumenanteil der aus Dien- und vinylaromatischen Sequenzen aufgebauten Weichblöcke bei 60 bis 95, bevorzugt bei 70 bis 90 und besonders bevorzugt bei 80 bis 90 Vol.-%. Die aus den vinylaromatischen Monomeren entstandenen Blöcke bilden dabei innerhalb des Blockkautschuks eine Hartphase, deren Volumenanteil entsprechend 5 bis 40, bevorzugt 10 bis 30 und besonders bevorzugt 10 bis 20 Vol.-% ausmacht. Es ist ausdrücklich festzustellen, daß dieser Volumenanteil mit dem erfindungsgemäß eingeschlossenen (okkludierten, d.h. chemisch nicht gebundenen) Anteil der Hartmatrix A nichts zu tun hat. Vielmehr bildet sich dieser okkludierte Anteil bei der nachstehend beschriebenen Herstellung der erfindungsgemäßen Formmasse, für die das Vorhandensein der Weichphase Voraussetzung ist.

Zur Herstellung von witterungsbeständigen und schlagzäh modifizierten Polymeren ist es zweckmäßig, die aliphatischen 0=0-Doppelbindungen teilweise oder vollständig zu hydrieren. Dies kann nach bekannten Methoden geschehen, wie es z.B. in EP-A-475 461, US-PS 4 656 230 oder US-PS 4 629 767 beschrieben ist. Bevorzugte Hydrierungsgrade der aliphatischen Doppelbindungen, um die Witterungsbeständigkeit wesentlich zu erhöhen, liegen zwischen 60 und 100 %.

Die erfindungsgemäßen Formmassen werden auf die für die Herstellung von schlagzäh modifizierten Styrolpolymeren typische Weise erhalten, zum Beispiel durch kontinuierliche Polymerisation der die Hartmatrix A bildenden Monomeren in Gegenwart des vorgebildeten (vgl. die vorstehenden Herstellungsangaben) Kautschuks in Masse oder in Lösung (vgl. US 2 94 692) oder durch diskontinuierliche Masse-Suspensions-Polymerisation (vgl.z.B. US-PS 2 862 906, EP-A-429 986, EP-A-274 109), wobei sich unter Einschluß von Matrix-Material aus dem eingesetzten Kautschuk die Weichphase B formt.

Kontinuierliche Verfahren, bei denen Kombinationen von Rührkesseln, Reaktortürmen mit Rohr- oder Rohrschlaufen-Reaktoren vorgesehen sind und die demnach mehrere Reaktionszonen aufweisen, sind besonders geeignet. Zur Verbesserung der radialen Durchmischung können in rohrförmigen Reaktoren, die keine - axiale - Rückvermischung verursachen, Einbauten vorgesehen werden.

Als Lösungsmittel für das kontinuierliche Masse/Lösungs-Verfahren eignen sich cycloaliphatische oder aromatische Kohlenwasserstoffe wie Cyclohexan, Ethylbenzol, Xylol, Isopropylbenzol oder Toluol. Der Anteil des Lösungsmittels am Reaktionsgemisch sollte dabei unter 30, bevorzugt unter 10 Gew.-% gehalten werden, um eine hohe Raum-Zeit-Ausbeute zu erzielen.

Die Polymerisation kann thermisch oder durch Verwendung von zerfallsfähigen Peroxiden oder Azoverbindungen ausgelöst werden. Die Initiatoren verbessern i.A. die Pfropfung und führen damit zu verbesserten Produkteigenschaften. Geeignet sind beispielsweise Perester wie t-Butylperoxibenzoat, t-Butylperoxiazetat, Dibenzoylperoxid und Dilaurylperoxid; Perketale wie z. B. 1,1-di-t-butylperoxicyclohexan, 1,1-di-t-butylperoxi-3,3,5-trimethyl-cyclohexan; Peroxide wie Dicumylperoxid, t-Butylhydroperoxid, t-Butylcumylperoxid oder Percarbonate wie t-Butylperoxiisopropyl-carbonat. Die Menge des eingesetzten Starters beträgt in der Regel 0,05 bis 0,3 Gew.-%, bezogen auf Monomere.

Zur Regelung des Molekulargewichtes können die üblicherweise verwendeten Mercaptane mit 4 bis 18 C-Atomen eingesetzt werden. Besonders bewährt haben sich n-Butylmercaptan, Octylmercaptan sowie n- und t-Dodecylmercaptan. Die Menge des eingesetzten Mercaptans beträgt in der Regel 0,01 bis 0,3 Gew.-% bezogen auf die Monomeren.

Zur Beeinflussung der Molekulargewichtsverteilung können auch bifunktionelle Verbindungen wie Divinylbenzol, Butandioldiacrylat oder Allylmethacrylat verwendet werden. Um Vernetzungen zu vermeiden werden diese in sehr geringer Menge, vornehmlich in Mengen von 5 bis 1500 ppm eingesetzt (EP-A-96 862).

Die angewandten Polymerisationstemperatur richtet sich danach, ob thermisch oder mittels Initiatoren polymerisiert wird und ggf. nach der Halbwertszeit des Initiators. Sie liegt i.a. im Bereich von 70 bis 200, vorzugsweise zwischen 80 bis 170°C. Die Temperaturführung über den gesamten Umsatzbereich ist dem Fachmann bekannt.

Während der Polymerisation (in diesem Falle insbesondere nach Auflösung des Kautschuks in dem bzw. den Monomeren) oder vor der Verarbeitung der erhaltenen Formmassen können Zusätze, wie sie für solche Polymerwerkstoffe üblich sind beigegeben werden. Üblich sind z.B. innere Gleitmittel, Schmiermittel, Antioxidantien oder UV-Stabilisatoren, Füllstoffe, Flammschutzmittel oder Treibmittel. Diese Zusätze können je nach ihrer Natur in sehr geringer Menge verwendet werden, wie Antioxidantien oder UV-Stabilisatoren, oder auch in größeren Mengen, z.B. Glasfasern als Füllstoff, Flammschutzmittel oder Pigmente, sofern auf die Transparenz keinen Wert gelegt wird und Werkstoffe mit besonderer Farbleuchtkraft erzielt werden sollen.

Die nach dem erfindungsgemäßen Verfahren erhaltenen Formmassen können nach allen Methoden der Thermoplastverarbeitung bearbeitet werden, also z.B. durch Extrudieren, Spritzgießen, Kalandrieren, Hohlkörperblasen, Schäumen, Pressen oder Sintern; besonders bevorzugt werden die dem nach dem erfindungsgemäßen Verfahren hergestellten Formmassen zum Spritzgießen und zur Extrusion eingesetzt.

Die Formmassen können - wiederum unter Berücksichtigung der Tatsache, daß dabei die Transparenz verloren gehen kann - auch mit anderen verträglichen Polymeren gemischt werden. Beispielsweise eignen sich besonders die nach diesem Verfahren hergestellten schlagzähen Polystyrolformmassen zur Abmischung mit Polyphenylenethern sowie zur Herstellung von flammgeschützten Produkten, wobei als Flammschutzmittel z.B. die üblichen Halogen- oder Phosphorverbindungen, Phosphazene oder Triazine (z.B. Melamin) geeignet sind.

Die in den nachstehenden Beispielen und Vergleichsversuchen angegebenen Mengen beziehen sich, wenn nicht anders angegeben, auf das Gewicht. Die angegebenen mechanischen Werte wurden nach folgenden Methoden an gepreßten Probekörpern ermittelt:

| | |
|---|---|
| Streckspannung: | nach DIN 53 455 |
| Reißfestigkeit: | nach DIN 53 455 |
| Lochkerbschlagzähigkeit: | nach DIN 53 753 |
| Transparenz | nach DIN 5036 (an 2 mm-Rundscheiben) |

### Beispiel 1

Je 15 Teile eines nach der Vorschrift der deutschen Offenlegungsschrift 44 20 952 hergestellten Styrol-Styrol/Butadien-Styrol-Dreiblockcopolymeren (S-S/B-S, wobei S/B sich auf die obenstehende Definition (V/D) bezieht; V = S = Styrol und B = D = Dien) mit einem Molekulargewicht Mₙ von 117 000 g/mol, einem Butadiengehalt von 35 % und einer Styrolblocklänge Mₙ von 12 600 g/mol wurden in 85 Teilen Styrol gelöst und mit 0,1 Teilen tert-Dodecylmercaptan, 0,2 Teilen eines handelsüblichen sterisch gehinderten Phenols als Stabilisator (Irganox® 1076) und 2 Teilen eines hydrierten Mineralöls versetzt.

Von dieser Lösung wurden 2000 g in einem 5 Liter fassenden Rührkessel mit Ankerrührer bei einer Temperatur von 135°C und einer Rührerdrehzahl von 300 min⁻¹ polymerisiert. Beim Umsatz von 40 % wurden der polymerisierenden Lösung 1,7 g Dicumylperoxid und eine Lösung aus 1800 g Wasser mit 1,8 g Natriumcarboximethylcellulose als Schutzkolloid und 1,8 g Natriumdiphosphat als Puffer zugesetzt. Die Rührerdrehzahl wurde auf 400 min⁻¹ erhöht, um eine Dispersion zu erhalten. Diese wurde dann noch 3 Stunden bei 110°C, 3 Stunden bei 130°C und 6 Stunden bei 140°C polymerisiert. Das Suspensionspolymerisat wurde vom begleitenden Wasser getrennt, zur Entfernung des Schutzkolloids mit Wasser gewaschen, getrocknet und bei 200°C Probekörper hergestellt. Die Probekörper waren transparent und hatten folgende Eigenschaften:

| | |
|---|---|
| Streckspannung | 29,5 [N/mm²] |
| Reißfestigkeit | 26,7 [N/mm²] |
| Lochkerbschlagzähigkeit | 5,8 [kJ/m²] |
| Transparenz | 83 [%] |

### Vergleichsversuch 1

Es wurde wie in Beispiel 1 verfahren, anstelle des erfindungsgemäßen Blockkautschuks wurden 8 Teile eines handelsüblichen medium-cis-Polybutadienkautschuks (HX 500 des Herstellers Bayer AG) ersetzt. Die bei 200°C erhaltenen Probekörper waren weiß (opak) und nicht transparent und wiesen folgende Eigenschaften 0 auf:

| | |
|---|---|
| Streckspannung | 26,8 [N/mm²] |
| Reißfestigkeit | 25,3 [N/mm²] |
| Lochkerbschlagzähigkeit | 4,9 [kJ/m²] |

### Beispiel 2

Für die Herstellung eines Styrol-Acrylnitril-Copolymerisats wurde ein S-S/B-S Dreiblockcopolymer mit einem Molekulargewicht Mₙ von 142 000 und einem Butadiengehalt von 45 Gew.-% eingesetzt.

9,5 Teile hiervon wurden in 71,4 Teilen Styrol gelöst. Die Lösung wurde mit 24,0 Teilen Acrylnitril, 0,15 Teilen tert-Dodecylmercaptan, 0,6 Teilen Paraffinöl und 0,08 Teilen t-Butylperbenzoat versetzt. Die Polymerisation geschah wie in Beispiel 1 beschrieben. Aus dem Suspensionspolymerisat wurden bei 230°C Probekörper hergestellt. Die Probekörper waren transparent und wiesen folgende Eigenschaften auf:

| | |
|---|---|
| Streckspannung | 16,8 [N/mm²] |
| Reißfestigkeit | 15,9 [N/mm²] |
| Lochkerbschlagzähigkeit | 30,2 [kJ/m²] |
| Transparenz | 85 [%] |

### Beispiel 3

Zur Herstellung eines witterungsbeständigen, schlagzähen Polystyrols wurde ein Styrol-Butadien-Blockkautschuk der Struktur S-(S/B)₁-(S/B)₂-(S/B)₃-S zunächst hydriert, indem eine 15 %ige wasserfreie Lösung des Kautschuks in Cyclohexan mit einer Mischung von 0,1 g Nickelacetylacetonat, 0,2 g Triethylaluminium und 20 ml Cyclohexan (je Liter) versetzt und bei 60°C und 25 bar mit Wasserstoff behandelt wurde. Der Kautschuk hatte ein Molekulargewicht Mₙ von 118 000 bzw. M_{w} von 177 000 und einen Butadien-Gehalt von 37 Gew.-%. Dabei war das Styrol/Butadien-verhältnis von (S/B)₁, (S/B)₂ und S/B)₃ unterschiedlich: 1,35; 0,90 bzw. 1,25.

Es wurde wie in Beispiel 1 angegeben polymerisiert und Probekörper erhalten, die transparent waren und folgende Eigenschaften aufwiesen:

| | |
|---|---|
| Streckspannung | 31,4 [N/mm²] |
| Reißfestigkeit | 28,3 [N/nm²] |
| Lochkerbschlagzähigkeit | 6,6 [kJ/m²] |
| Transparenz | 87 [%] |

### Beispiel 4

15 Teile des Styrol-Styrol/Butadien-Styrol-Dreiblockcopolymeren aus Beispiel 1 wurden in einer Mischung von 5 Teilen Ethylbenzol und 80 Teilen Styrol gelöst. Die Lösung wurde mit 0,1 Teilen t-Dodecylmercaptan, 0,14 Teilen t-Butylperbenzoat und 1 Teil Paraffinöl versetzt.

Von dieser Lösung wurden jeweils 5 Liter je Stunde einer Kaskade aus 2 Rührkesseln mit 1 bzw. 5 Litern effektivem Füllvolumen und 2 Turmreaktoren mit einem effektiven Füllvolumen von je 10 Litern zugeführt und polymerisiert. Die Polymerlösung wurde einem Entgasungsapparat zugeführt und bei 220 bis 240°C und auf 10 mbar vermindertem Druck von Lösungsmittel und Restmonomeren befreit. Die bei der Polymerisation angewandten Rührerdrehzahlen, Temperaturen und erzielten Gesamtumsätze sind in Tabelle 1 zusammengestellt.

**Tabelle 1**

| (Rührerdrehzahl n - Temperatur-integraler Umsatz U) | | | |
|---|---|---|---|
| | n [min⁻¹] | Temp. [°C] | U |
| 1. Rührreaktor | 150 | 110 | 5,8 |
| 2. Rührreaktor | 170 | 125 | 22,8 |
| 1. Turm | 15 | 135 | 52,5 |
| 2. Turm | 5 | 148 | 74,6 |

Das erhaltene transparente Produkt wurde zu Probekörpern verpreßt und es wurden die folgenden Eigenschaften ermittelt:

| | |
|---|---|
| Streckspannung | 27,8 [N/mm²] |
| Reißfestigkeit | 25,9 [N/mm²] |
| Lochkerbschlagzähigkeit | 6,5 [kJ/m²] |
| Transparenz | 86 [%] |

An den Beispielen sieht man, daß mit Hilfe des speziellen Blockkautschuks Formmassen erhalten werden können, die nicht nur schlagzäh, sondern auch transparent sind. Der Vergleich von Beispiel 1 mit dem Vergleichsversuch zeigt außerdem, daß bei vergleichbaren sonstigen Eigenschaften der spezifische Polybutadiengehalt erfindungsgemäß deutlich geringer gehalten werden kann, d.h. die erfindungsgemäß Formmassen auch ohne weitere Maßnahmen (Hydrierung) besser Witterungsbeständig sind als die bisher verfügbaren.

## Patentansprüche

1. Formmasse auf der Grundlage von, bezogen auf die Formmasse aus A und B,
A: 60 bis 98 Gew.-% einer Hartmatrix A aus polymerisierten oder copolymerisierten Einheiten mindestens eines vinylaromatischen Monomeren (A1) oder mindestens eines vinylaromatischen Monomeren (A1) und mindestens eines polaren Comonomeren (A2) und
B: 2 bis 40 Gew.-% einer Weichphase B, gebildet aus einem Blockcopolymer aus 55 bis 90 Gew.-% vinylaromatischen Monomeren V und 10 bis 45 Gew.-% Dien D, das mindestens einen statistisch oder quasi-statistisch aufgebauten Block (V/D) aus vinylaromatischem Monomeren und Dien und mindestens einen aus einem vinylaromatischen Monomeren aufgebauten Block V aufweist und, bezogen auf die Weichphase B, 10 bis 80 Gew.-% während der Polymerisation der Hartmatrix A in Gegenwart des Blockkautschuks gebildete Einschlüsse (Okklusionen a) von Matrix-Material A enthält.

2. Formmasse nach Anspruch 1, dadurch gekennzeichnet, daß das Blockcopolymer die Struktur V-(D/V)-V, X-[-(D/V)-V]₂ oder Y-[-(D/V)-V]₂ besitzt und X für den Rest eines bifunktionellen Initiators und Y für den Rest eines bifunktionellen Kopplungsmittels steht.

3. Formmasse nach Anspruch 1 oder 2, dadurch gekennzeichnet, daß der Block (V/D) aus 2 bis 15 statistischen Teilblöcken mit unterschiedlichem Vinylaromat-/Dien-Verhältnis besteht, mit der Maßgabe, daß die Glasübergangstemperatur Tg jedes Teilblockes jeweils unter 25°C liegt.

4. Formmasse nach einem der Ansprüche 1 bis 3, dadurch gekennzeichnet, daß die aus vinylaromatischen Monomeren aufgebauten Blöcke V des Blockcopolymeren einen Volumenanteil von 5 bis 40 Volumen-% ausmachen.

5. Formmasse nach einem der Ansprüche 1 bis 4, dadurch gekennzeichnet, daß der Anteil an 1,2-Verknüpfungen 15 bis 40 %, bezogen auf alle Dieneinheiten, beträgt.

6. Formmasse nach einem der Ansprüche 1 bis 5, dadurch gekennzeichnet, daß das Blockcopolymere teilweise oder vollständig hydriert ist.

7. Formmasse nach einem der Ansprüche 1 bis 6, dadurch gekennzeichnet, daß als vinylaromatische Monomerer (Al) Styrol, alpha-Methylstyrol oder 4-Methylstyrol eingesetzt werden.

8. Formmasse nach einem der Ansprüche 1 bis 7, dadurch gekennzeichnet, daß als polare Comonomere (A2) Acrylnitril, Maleinsäureanhydrid, Maleinsäureimid, Maleinsäure-N-Phenylimid, ein Malein- oder Fumarsäurehalbester oder -diester, Methylacrylat, Methylmethacrylat, Cyclohexylmethacrylat, Phenylmethacrylat, Methylacrylat, Butylacrylat, Methacrylamid, Acrylamid oder Acrylsäure eingesetzt werden.

9. Verfahren zur Herstellung von Formmassen gemäß einem der Ansprüche 1 bis 8 durch radikalische Polymerisation bzw. Copolymerisation der Monomeren in Lösung oder Masse, dadurch gekennzeichnet, daß die Monomeren in Gegenwart des Blockcopolymeren polymerisiert werden.

10. Verfahren nach Anspruch 9, dadurch gekennzeichnet, daß die Polymerisation kontinuierlich in Masse oder Lösung durchgeführt wird.

11. Verfahren nach Anspruch 9, dadurch gekennzeichnet, daß die Polymerisation diskontinuierlich als Masse/Suspensions-Verfahren durchgeführt wird.

12. Formmasse nach einem der Ansprüche 1 bis 8, enthaltend einen Polyphenylenether.

13. Formmasse nach einem der Ansprüche 1 bis 8, die eine Transparenz, gemessen nach DIN 5036, von mehr als 60 % aufweist.

14. Verwendung der Formmasse nach einem der Ansprüche 1 bis 8 zur Herstellung von Folien, Platten oder Formkörpern.

## Claims

1. A molding material based on
A: from 60 to 98% by weight of a hard matrix A of polymerized or copolymerized units of at least one vinylaromatic monomer (A1) or at least one vinylaromatic monomer (A1) and at least one polar comonomer (A2) and
B: from 2 to 40% by weight of a soft phase B formed from a block copolymer comprising from 55 to 90% by weight of vinylaromatic monomer V and from 10 to 45% by weight of diene D, which has at least one random or quasi-random block (V/D) of vinylaromatic monomer and diene and at least one block V composed of a vinylaromatic monomer and contains from 10 to 80% by weight, based on the soft phase B, of occlusions (a) of matrix material A formed during the polymerization of the hard matrix A in the presence of the block rubber,
the percentages of A and B being based on the molding material comprising A and B.

2. A molding material as claimed in claim 1, wherein the block copolymer has the structure V-(D/V)-V, X-[-(D/V)-V]₂ or Y-[-(D/V)-V]₂ and X is the radical of a bifunctional initiator and Y is the radical of a bifunctional coupling agent.

3. A molding material as claimed in claim 1 or 2, wherein the block (V/D) consists of from 2 to 15 random part-blocks having a different vinylaromatic/diene ratio, with the proviso that the glass transition temperature Tg of each part-block is less than 25°C in each case.

4. A molding material as claimed in any of claims 1 to 3, wherein the blocks V, composed of vinylaromatic monomers, of the block copolymer account for a proportion by volume of from 5 to 40% by volume.

5. A molding material as claimed in any of claims 1 to 4, wherein the proportion of 1,2-linkages is from 15 to 40%, based on all diene units.

6. A molding material as claimed in any of claims 1 to 5, wherein the block copolymer is partially or completely hydrogenated.

7. A molding material as claimed in any of claims 1 to 6, wherein the vinylaromatic monomers (A1) used are styrene, alpha-methylstyrene or 4-methylstyrene.

8. A molding material as claimed in any of claims 1 to 7, wherein the polar comonomers (A2) used are acrylonitrile, maleic anhydride, maleimide, N-phenylmaleimide, a maleic or fumaric half-ester or diester, methyl acrylate, methyl methacrylate, cyclohexyl methacrylate, phenyl methacrylate, methyl acrylate, butyl acrylate, methacrylamide, acrylamide or acrylic acid.

9. A process for the preparation of a molding material as claimed in any of claims 1 to 8 by free radical polymerization or copolymerization of the monomers in the presence or absence of a solvent, wherein the monomers are polymerized in the presence of the block copolymer.

10. A process as claimed in claim 9, wherein the polymerization is carried out continuously in the presence or absence of a solvent.

11. A process as claimed in claim 9, wherein the polymerization is carried out batchwise as a mass/suspension process.

12. A molding material as claimed in any of claims 1 to 8, containing a polyphenylene ether.

13. A molding material as claimed in any of claims 1 to 8, which has a transparency of more than 60%, measured according to DIN 5036.

14. Use of a molding material as claimed in any of claims 1 to 8 for the production of films, sheets or moldings.

## Revendications

1. Matière moulable sur base de, rapporté à la matière moulable constituée de A et de B,
A : de 60 à 90% en poids d'une matrice dure A, formée d'unités polymérisées ou copolymérisées d'au moins un monomère vinyle aromatique (A1) ou d'au moins un monomère vinyle aromatique (A1) et d'au moins un comonomère polaire (A2), et
B: de 2 à 40% en poids d'une phase molle B, constituée d'un polymère séquencé formé de 55 à 90% en poids de monomère vinyle aromatique V et de 10 à 45% en poids de diène D, qui présente au moins une séquence à structure statistique ou quasi statistique (V/D) de monomère vinyle aromatique et de diène et au moins une séquence V constituée d'un monomère vinyle aromatique et qui contient, rapporté à la phase molle B, de 10 à 80% en poids d'inclusions (occlusions A) de matériau de matrice A formé pendant la polymérisation de la matrice dure A en présence du caoutchouc séquencé.

2. Matière moulable selon la revendication 1, caractérisée en ce que le copolymère séquencé possède la structure V-(D/V)-V, X-[-(D/V)-V)₂ ou Y-[-(D/V)-V]₂, X représentant le radical d'un initiateur bifonctionnel et Y représentant le radical d'un agent de couplage bifonctionnel.

3. Matière moulable selon la revendication 1 ou 2, caractérisée en ce que la séquence (V/D) est constituée de 2 à 15 séquences partielles statistiques avec un rapport différent vinyle aromatique/diène avec pour condition que la température de transition vitreuse Tg de chaque séquence partielle est chaque fois inférieure à 25°C.

4. Matière moulable selon l'une des revendications 1 à 3, caractérisée en ce que les séquences V du copolymère séquencé constituées de monomères vinyles aromatiques constituent une fraction volumique allant de 5 à 40% en volume.

5. Matière moulable selon l'une des revendications 1 à 4, caractérisée en ce que la fraction des réticulations 1,2 est comprise entre 15 et 40% rapportée à toutes les unités de diène.

6. Matière moulable selon l'une des revendications 1 à 5, caractérisée en ce que le copolymère séquencé est hydrogéné partiellement ou complètement.

7. Matière moulable selon l'une des revendications 1 à 6, caractérisée en ce que l'on utilise, comme monomère vinyle aromatique (A1), du styrène, de l'alpha-méthylstyrène ou du 4-méthylstyrène.

8. Matière moulable selon l'une des revendications 1 à 7, caractérisée en ce que l'on utilise, comme comonomère polaire (A2) de l'acrylnitrile, de l'anhydride maléique, de l'imide d'acide maléique, du N-phénylimide d'acide maléique, un semi-ester ou un di-ester d'acide maléique ou d'acide fumarique, de l'acrylate de méthyle, du méthacrylate de méthyle, du méthacrylate de cyclohexyle, du méthacrylate de phényle, de l'acrylate de méthyle, de l'acrylate de butyle, du méthylacrylamide, de l'acrylamide ou de l'acide acrylique.

9. Procédé de préparation d'une matière moulable selon l'une des revendications 1 à 8 par polymérisation ou copolymérisation radicalaire des monomères en solution ou en masse, caractérisé en ce que les monomères sont polymérisés en présence du copolymère séquencé.

10. Procédé selon la revendication 9, caractérisé en ce que la polymérisation est effectuée en continu, soit en masse, soit en solution.

11. Procédé selon la revendication 9, caractérisé en ce que la polymérisation est effectuée en discontinu selon un procédé en masse et en suspension.

12. Matière moulable selon l'une des revendications 1 à 8, contenant un éther de polyphénylène.

13. Matière moulable selon l'une des revendications 1 à 8, qui présente une transparence supérieure à 60%, mesurée selon la DIN 5036.

14. Utilisation de la matière moulable selon l'une des revendications 1 à 8, pour la préparation de feuilles minces, de plaques ou de pièces de forme.
